# EUROPEAN PATENT APPLICATION

(11) **EP 4 513 843 A1**
(43) Date of publication of application: **26.02.2025**
(21) Application number: 23834414.7
(22) Date of filing: 24.03.2023
(51) Int. Cl.: H04L 41/0677

(54) **FAULT ROOT CAUSE ALARM POSITIONING METHOD, FAULT ALARM MODE CONSTRUCTION METHOD, AND DEVICE**

(30) Priority: 08.07.2022 CN 202210801417
(71) Applicant: ZTE Corporation, Shenzhen, Guangdong 518057 (CN)
(72) Inventor: LI, Haibin, Shenzhen, Guangdong 518057 (CN)
(74) Representative: Savi, Massimiliano
(86) International application number: PCT/CN2023/083733
(87) International publication number: WO 2024/007631

(57) **Abstract**

Disclosed in the present application are a fault root cause alarm positioning method, a fault alarm mode construction method, and a device. The fault root cause alarm positioning method comprises: acquiring an aggregated fault, and splitting the aggregated fault to obtain a plurality of sub-faults; for each of the sub-faults, determining a target root alarm in the sub-fault according to the sub-fault and a plurality of preset fault alarm modes, wherein each of the preset fault alarm modes comprises a preset root alarm and a preset derived alarm, which corresponds to the preset root alarm; and combining the target root alarms in all the sub-faults, so as to obtain a final root alarm.

## Description

### CROSS-REFERENCE TO RELATED APPLICATION

This application is filed on the basis of Chinese patent application No. 202210801417.2 filed July 8, 2022, and claims priority to the Chinese patent application, the entire contents of which are incorporated herein by reference.

### TECHNICAL FIELD

The present disclosure relates to the technical field of communication, and more particularly, to a fault root cause alarm locating method, a fault alarm mode construction method, and a device.

### BACKGROUND

When a fault occurs in a telecommunications network, one or more alarms directly related to the fault are usually generated. Such alarms are called root cause alarms, or briefly referred to as root alarms. A fault can be quickly and effectively analyzed and handled using a root alarm. Therefore, root alarm locating is very important. However, when a fault occurs, devices and services related to this fault also generate a large number of non-root alarms in a short period of time. Such non-root alarms are called derivative alarms. Consequently, the root alarms are often obscured by the large volume of derivative alarms, significantly impacting the efficiency of operations and maintenance personnel in addressing faults.

### SUMMARY

Embodiments of the present disclosure provide a fault root cause alarm locating method, a fault alarm mode construction method, and a device, to improve the accuracy of root alarm locating.

In accordance with an aspect of the present disclosure, an embodiment provides a fault root cause alarm locating method, including: acquiring an aggregated fault, and splitting the aggregated fault to obtain a plurality of sub-faults; for each of the sub-faults, determining a target root alarm in the sub-fault according to the sub-fault and a plurality of preset fault alarm modes, where each of the preset fault alarm modes includes a preset root alarm and preset derivative alarms corresponding to the preset root alarm; and combining the target root alarms in all the sub-faults to obtain a final root alarm.

In accordance with another aspect of the present disclosure, an embodiment provides a fault alarm mode construction method, for constructing the preset fault alarm mode in the fault root cause alarm locating method described above, the fault alarm mode construction method including: acquiring an alarm association rule, where the alarm association rule includes a plurality of parent alarms and sub-alarms directly associated with each of the parent alarms; determining a target parent alarm from the plurality of parent alarms, and selecting target sub-alarms directly and indirectly associated with the target parent alarm; and constructing the preset fault alarm mode according to the target parent alarm and the target sub-alarms, where the preset root alarm in the preset fault alarm mode is the target parent alarm, and the preset derivative alarms in the preset fault alarm mode are the target sub-alarms.

In accordance with another aspect of the present disclosure, an embodiment provides a network device, including: a memory, a processor, and a computer program stored in the memory and executable by the processor, where the computer program, when executed by the processor, causes the processor to implement the fault root cause alarm locating method and/or the fault alarm mode construction method described above.

In accordance with another aspect of the present disclosure, an embodiment provides a computer-readable storage medium, storing computer-executable instructions which, when executed by a processor, cause the processor to implement the fault root cause alarm locating method and/or the fault alarm mode construction method described above.

In accordance with another aspect of the present disclosure, an embodiment further provides a computer program product, including a computer program or computer instructions stored in a computer-readable storage medium, where the computer program or computer instructions, when read from the computer-readable storage medium by a processor of a computer device, cause the computer device to implement the fault root cause alarm locating method and/or the fault alarm mode construction method described above.

In the embodiments of the present disclosure, different from the unified processing of fault alarms in the existing technology, in the embodiments of the present application, an aggregated fault is first split into sub-faults; each of the sub-faults is matched against a preset fault alarm mode to obtain a target root alarm corresponding to the sub-fault; and finally the target root alarms of all the sub-faults are combined to obtain a final root alarm. In the embodiments of the present disclosure, a fault splitting and combining method can be implemented when there is no propagation relationship between different fault alarms, an aggregated fault is split, a root alarm of each of the sub-faults is located, and then the root alarms of the sub-faults are combined, thereby improving the accuracy of root alarm locating.

### BRIEF DESCRIPTION OF DRAWINGS

FIG. 1 is a schematic diagram of an implementation environment configured for executing a fault root cause alarm locating method and/or a fault alarm mode construction method according to an embodiment of the present disclosure;
FIG. 2 is a flowchart of a fault root cause alarm locating method according to an embodiment of the present disclosure;
FIG. 3 is a detailed flowchart of an embodiment of an aggregated fault splitting mode in S 100 of FIG. 2;
FIG. 4 is a detailed flowchart of another embodiment of an aggregated fault splitting mode in S100 of FIG. 2;
FIG. 5 is a detailed flowchart of sorting and screening a plurality of sub-faults according to an embodiment of the present disclosure;
FIG. 6 is a detailed flowchart of determining a target root alarm according to a first matching degree according to an embodiment of the present disclosure;
FIG. 7 is a detailed flowchart of adjusting fault alarms in sub-faults according to a second matching degree according to an embodiment of the present disclosure;
FIG. 8 is a detailed flowchart of adjusting fault alarms in sub-faults according to an embodiment of the present disclosure;
FIG. 9 is a detailed flowchart of adjusting fault alarms in sub-faults according to another embodiment of the present disclosure;
FIG. 10 is a detailed flowchart of combining target root alarms to obtain a final root alarm according to an embodiment of the present disclosure;
FIG. 11 is a detailed flowchart of combining target root alarms to obtain a final root alarm according to another embodiment of the present disclosure;
FIG. 12 is a flowchart of a fault alarm mode construction method according to an embodiment of the present disclosure;
FIG. 13 is a flowchart of constructing a fault alarm mode by fault simulation according to an embodiment of the present disclosure;
FIG. 14 is a detailed flowchart of updating a plurality of preset fault alarm modes according to simulated fault alarm mode according to an embodiment of the present disclosure;
FIG. 15 is a detailed flowchart of updating a plurality of preset fault alarm modes according to simulated fault alarm mode according to another embodiment of the present disclosure;
FIG. 16 is a detailed flowchart of updating a plurality of preset fault alarm modes according to simulated fault alarm mode according to another embodiment of the present disclosure;
FIG. 17 is a detailed flowchart of updating a plurality of preset fault alarm modes according to simulated fault alarm mode according to another embodiment of the present disclosure;
FIG. 18 is a flowchart of constructing a fault alarm mode by Artificial Intelligence (AI) according to an embodiment of the present disclosure;
FIG. 19 is a detailed flowchart of updating a plurality of preset fault alarm modes according to a historical fault alarm mode according to an embodiment of the present disclosure;
FIG. 20 is a detailed flowchart of updating a plurality of preset fault alarm modes according to a historical fault alarm mode according to another embodiment of the present disclosure;
FIG. 21 is a detailed flowchart of updating a plurality of preset fault alarm modes according to a historical fault alarm mode according to another embodiment of the present disclosure;
FIG. 22 is a detailed flowchart of updating a plurality of preset fault alarm modes according to a historical fault alarm mode according to another embodiment of the present disclosure;
FIG. 23 is an overall structural diagram of an intelligent fault processing system according to an embodiment of the present disclosure;
FIG. 24 is a flowchart of fault alarm mode mining according to an embodiment of the present disclosure;
FIG. 25 is an example diagram of a fault alarm mode according to an embodiment of the present disclosure;
FIG. 26 is a flowchart of a fault root cause alarm locating method based on a fault alarm mode according to an embodiment of the present disclosure;
FIG. 27 is a flowchart of a fault alarm mode matching method according to an embodiment of the present disclosure;
FIG. 28 is a flowchart of fault alarm mode mining according to an embodiment of the present disclosure;
FIG. 29 is a flowchart of root alarm locating based on fault alarm mode matching according to an embodiment of the present disclosure;
FIG. 30 is an example diagram of a Packet Transport Network (PTN) resource topology and fault alarms according to an embodiment of the present disclosure;
FIG. 31 is a flowchart of sub-fault alarm mode matching according to an embodiment of the present disclosure; and
FIG. 32 is a schematic structural diagram of a network device according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It is to be noted, although logical orders have been shown in the flowcharts, in some cases, the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In some cases, when a fault occurs in a telecommunications network, one or more alarms directly related to the fault are usually generated. Such alarms are called root cause alarms, or briefly referred to as root alarms. A fault can be quickly and effectively analyzed and handled using a root alarm. Therefore, root alarm locating is very important. However, when a fault occurs, devices and services related to this fault also generate a large number of non-root alarms in a short period of time. Such non-root alarms are called derivative alarms. As a result, the root alarms are overwhelmed by the large number of derivative alarms, seriously affecting the efficiency of operation and maintenance personnel in handling faults.

In addition, intelligent fault processing is a technology of performing fault analysis from the fault dimension. Its goal is to aggregate alarms caused by a fault, briefly referred to as fault aggregation, such that aggregated faults are analyzed one by one, to avoid simultaneous analysis of alarms in the entire network, which facilitates root alarm locating and fault analysis and processing, thereby improving operation and maintenance efficiency and reducing operation and maintenance costs.

In addition, alarm correlation analysis is an important method for locating a root alarm of a fault, which uses the propagation or causality relationship between alarms to determine the root alarm. Through the accumulation of expert experience and AI mining, a large number of alarm association rules have been accumulated in various fields. However, alarm association rules often cannot cover all alarms, and because of the rapid development of telecommunications networks, new products and technologies are constantly produced, so the improvement of alarm association rules is a long-term and continuous process. Moreover, the mining of alarm association rules requires accurate labeling, which is difficult to implement.

In addition, intelligent fault root alarm locating often involves only the analysis of aggregated fault alarms, which requires accurate and comprehensive aggregation of fault alarms. However, for telecommunications networks, especially for complex transmission networks, when fault alarms are aggregated, it is inevitable that not all matching alarms are aggregated or some non-matching alarms are erroneously aggregated for this fault. In this case, if alarm correlation analysis is directly used to analyze aggregated alarms, the accuracy of root alarm locating will be affected.

Therefore, the embodiments of the present disclosure provide a fault root cause alarm locating method, a fault alarm mode construction method, a network device, a computer-readable storage medium, and a computer program product. The fault alarm mode construction method of the embodiments of the present disclosure not only can make full use of existing alarm association rules, but also can use simulated faults or artificial intelligence methods for mining, thereby ensuring the mode mining efficiency. Compared with the alarm correlation rules, the use of fault alarm modes for root alarm locating has a certain fault-tolerant capability. In addition, the fault root cause alarm locating method of the embodiments of the present disclosure is different from the unified processing of fault alarms in the existing technology. In the embodiments of the present disclosure, a fault is first split into sub-faults according to a service or topology; each of the sub-faults is matched against a fault alarm mode to locate a root alarm; and finally the root alarms of the sub-faults are combined through fault alarm mode matching to obtain a final root alarm. In the process of fault matching, secondary analysis adjustment is performed for the currently processed fault and faults associated therewith, to solve the problem that not all matching alarms are aggregated or some non-matching alarms are erroneously aggregated.

The embodiments of the present disclosure will be further described in detail below in conjunction with the accompanying drawings.

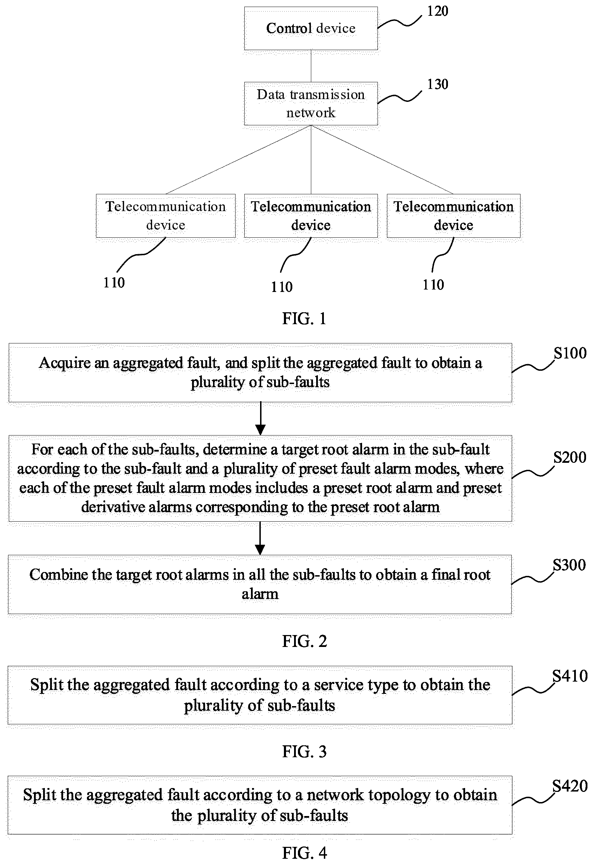

FIG. 1 is a schematic diagram of an implementation environment configured for executing a fault root cause alarm locating method and/or a fault alarm mode construction method according to an embodiment of the present disclosure.

In the example of FIG. 1, the implementation environment includes, but not limited to, telecommunication devices 110 and a control device 120. The telecommunication devices 110 are in communication connection with the control device 120.

In an embodiment, the telecommunication devices 110 may each be a general-purpose network device. The telecommunication devices 110 may each be, but not limited to, a PTN device, an Optical transport network (OTN) device, etc., or may be a switch, a router etc., which is not particularly limited in the embodiments of the present disclosure. In addition, a telecommunications network to which the telecommunication device 110 belongs in the embodiments of the present disclosure may be a PTN bearer network, an OTN network, a data center, etc., which is not particularly limited in the embodiments of the present disclosure.

In addition, in an embodiment, the control device 120 may be one or more servers, or a server cluster, or other network devices that have a fault root cause alarm locating capability and a fault alarm mode construction capability, which is not particularly limited in the embodiments of the present disclosure.

In addition, in an embodiment, the implementation environment further includes, but not limited to, a data transmission network 130. The data transmission network 130 is a network connecting the control device 120 and the telecommunication devices 110, and is configured for transmitting data such as alarms and logs generated by the telecommunication devices 110 to the control device 120, and transmitting various network instructions from the control device 120 to the corresponding telecommunication devices 110.

In addition, the example in FIG. 1 is merely an application scenario of an embodiment of the present disclosure and is not intended to limit the application scenarios of the present disclosure.

It can be understood by those having ordinary skills in the art that the implementation environment configured for executing the fault root cause alarm locating method and/or the fault alarm mode construction method may be applied to a 3rd Generation (3G) communication network system, a Long Term Evolution (LTE) communication network system, a 5th Generation (5G) communication network system, a 6th Generation (6G) communication network system, future evolved mobile communication network systems, etc., which is not particularly limited in this embodiment.

Those having ordinary skills in the art may understand that the implementation environment shown in FIG. 1 does not constitute a limitation to the embodiments of the present disclosure, and more or fewer components than those shown in the figure may be included, or some components may be combined, or a different component arrangement may be used.

Based on the above implementation environment, various embodiments of the fault root cause alarm locating method of the present disclosure are proposed below.

FIG. 2 is a flowchart of a fault root cause alarm locating method according to an embodiment of the present disclosure. The fault root cause alarm locating method may be applied to, but not limited to, the control device in FIG. 1, and may include, but not limited to, the following steps S 100, S200, and S300.

At S100, an aggregated fault is acquired, and split to obtain a plurality of sub-faults.

At S200, for each of the sub-faults, a target root alarm in the sub-fault is determined according to the sub-fault and a plurality of preset fault alarm modes, where each of the preset fault alarm modes includes a preset root alarm and preset derivative alarms corresponding to the preset root alarm.

At S300, the target root alarms in all the sub-faults are combined to obtain a final root alarm.

In the embodiments of the present disclosure, different from the unified processing of fault alarms in the existing technology, an aggregated fault is first split into sub-faults; each of the sub-faults is matched against a preset fault alarm mode to obtain a target root alarm corresponding to the sub-fault; and finally the target root alarms of all the sub-faults are combined to obtain a final root alarm. In the embodiments of the present disclosure, a fault splitting and combining method can be implemented when there is no propagation relationship between different fault alarms, to be specific, an aggregated fault is split into sub-faults, a root alarm of each of the sub-faults is located, and then the root alarms of the sub-faults are combined, thereby improving the accuracy of root alarm locating.

In addition, the splitting of the aggregated fault in 5100 may include, but not limited to, two implementation cases in FIG. 3 and FIG. 4 as follows.

FIG. 3 is a detailed flowchart of an embodiment of an aggregated fault splitting mode in S100 of FIG. 2. Splitting the aggregated fault to obtain a plurality of sub-faults in S100 may include, but not limited to, a following step S410.

At S410, the aggregated fault is split according to a service type to obtain the plurality of sub-faults.

FIG. 4 is a detailed flowchart of another embodiment of an aggregated fault splitting mode in S100 of FIG. 2. Splitting the aggregated fault to obtain a plurality of sub-faults in S100 may include, but not limited to, a following step S420.

At S420, the aggregated fault is split according to a network topology to obtain the plurality of sub-faults.

In this embodiment of the present disclosure, the aggregated fault can be split according to the service type or the network topology. To solve the problem that alarms in the aggregated fault correspond to different service types or network topologies and there is no propagation relationship between the alarms corresponding to different service types or network topologies, in this embodiment of the present disclosure, a fault splitting and combining method is implemented, to be specific, an aggregated fault is split into sub-faults according to a service type or a network topology, a root alarm of each of the sub-faults is located, and then the root alarms of the sub-faults are combined, thereby improving the accuracy of root alarm locating.

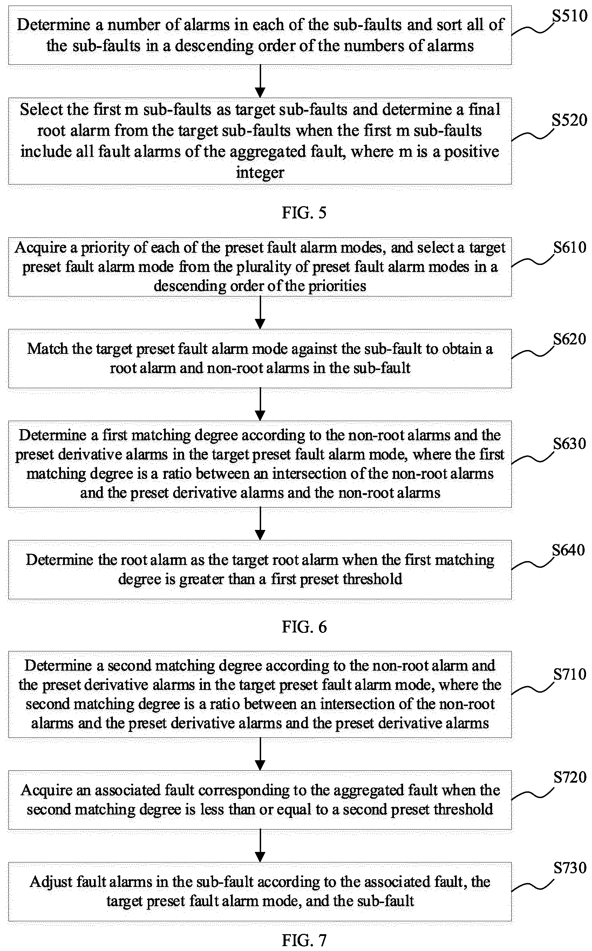

FIG. 5 is a detailed flowchart of sorting and screening a plurality of sub-faults according to an embodiment of the present disclosure. After the plurality of sub-faults are obtained in S100, the fault root cause alarm locating method may further include, but not limited to, the following steps S510 and S520.

At S510, a number of alarms in each of the sub-faults is determined and all of the sub-faults are sorted in a descending order of the numbers of alarms.

At S520, first m sub-faults are selected as target sub-faults and a final root alarm is determined from the target sub-faults when the first m sub-faults include all fault alarms of the aggregated fault, where m is a positive integer.

The sub-faults are sorted in a descending order of the numbers of alarms, and if a few sub-faults ranking in front already include all alarms, the other sub-faults are deleted.

FIG. 6 is a detailed flowchart of determining a target root alarm according to a first matching degree according to an embodiment of the present disclosure. Determining a target root alarm in the sub-fault according to the sub-fault and a plurality of preset fault alarm modes in S200 may include, but not limited to, the following steps S610, S620, S630, and S640.

At S610, a priority of each of the preset fault alarm modes is acquired, and a target preset fault alarm mode is selected from the plurality of preset fault alarm modes in a descending order of the priorities.

At S620, the target preset fault alarm mode is matched against the sub-fault to obtain a root alarm and non-root alarms in the sub-fault.

At S630, a first matching degree is determined according to the non-root alarms and the preset derivative alarms in the target preset fault alarm mode, where the first matching degree is a ratio between an intersection of the non-root alarms and the preset derivative alarms and the non-root alarms.

At S640, the root alarm is determined as the target root alarm when the first matching degree is greater than a first preset threshold.

In this embodiment of the present disclosure, the target preset fault alarm mode is selected from the plurality of preset fault alarm modes in the descending order of the priorities. Next, root alarms in the sub-faults are obtained through matching, and non-root alarms in the sub-faults are determined. Then, the first matching degree is determined according to the non-root alarms and the preset derivative alarms in the target preset fault alarm mode. If the first matching degree is greater than the first preset threshold, the root alarm is determined as the target root alarm. If the first matching degree is less than or equal to the first preset threshold, matching steps similar to those described above are executed using a preset fault alarm mode of a next priority as a next target preset fault alarm mode.

The first preset threshold may be preset, and the value of the first preset threshold is not particularly limited in the embodiments of the present disclosure.

FIG. 7 is a detailed flowchart of adjusting fault alarms in sub-faults according to a second matching degree according to an embodiment of the present disclosure. After the root alarm is determined as the target root alarm in S640, the fault root cause alarm locating method may further include, but not limited to, the following steps S710, S720, and S730.

At S710, a second matching degree is determined according to the non-root alarms and the preset derivative alarms in the target preset fault alarm mode, where the second matching degree is a ratio between an intersection of the non-root alarms and the preset derivative alarms and the preset derivative alarms.

At S720, an associated fault corresponding to the aggregated fault is acquired when the second matching degree is less than or equal to a second preset threshold.

At S730, fault alarms in the sub-fault are adjusted according to the associated fault, the target preset fault alarm mode, and the sub-fault.

In this embodiment of the present disclosure, after the target root alarm is determined, the second matching degree is determined according to the non-root alarms and the preset derivative alarms in the target preset fault alarm mode. If the second matching degree is less than or equal to the second preset threshold, the fault alarms in the sub-fault are adjusted according to the associated fault, the target preset fault alarm mode, and the sub-fault. If the second matching degree is greater than the second preset threshold, there is no need to adjust the fault alarms in the sub-fault.

The second preset threshold may be preset, and the value of the second preset threshold is not particularly limited in the embodiments of the present disclosure.

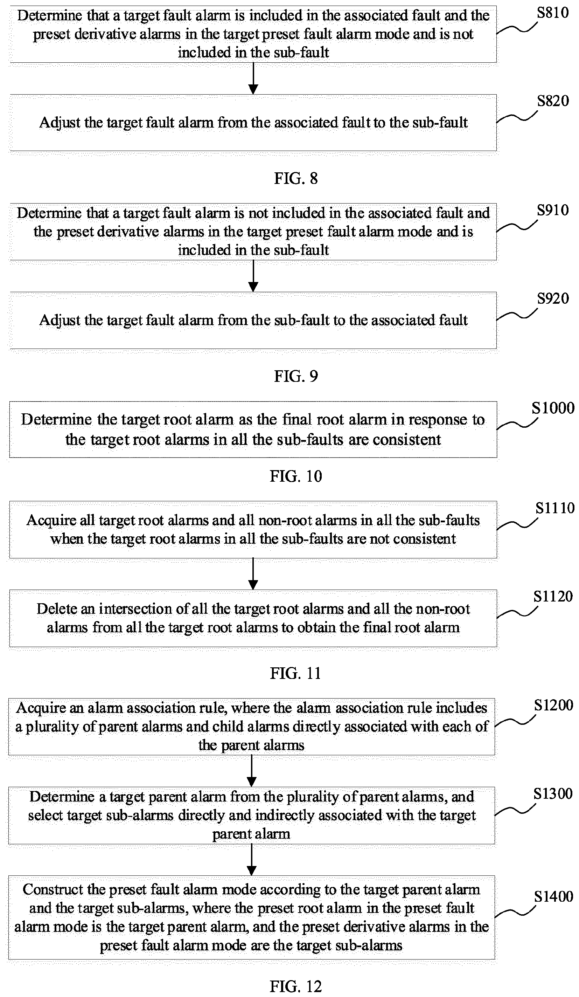

In addition, adjusting fault alarms in the sub-fault according to the associated fault, the target preset fault alarm mode, and the sub-fault in S730 may include, but not limited to, two implementation cases in FIG. 8 and FIG. 9 as follows.

FIG. 8 is a detailed flowchart of adjusting fault alarms in sub-faults according to an embodiment of the present disclosure. Adjusting fault alarms in the sub-fault according to the associated fault, the target preset fault alarm mode, and the sub-fault in S730 may include, but not limited to, the following steps S810 and S820.

At S810, it is determined that a target fault alarm is included in the associated fault and the preset derivative alarms in the target preset fault alarm mode and is not included in the sub-fault.

At S820, the target fault alarm is adjusted from the associated fault to the sub-fault.

FIG. 9 is a detailed flowchart of adjusting fault alarms in sub-faults according to another embodiment of the present disclosure. Adjusting fault alarms in the sub-fault according to the associated fault, the target preset fault alarm mode, and the sub-fault in S730 may include, but not limited to, the following steps S910 and S920.

At S910, it is determined that a target fault alarm is not included in the associated fault and the preset derivative alarms in the target preset fault alarm mode and is included in the sub-fault.

At S920, the target fault alarm is adjusted from the sub-fault to the associated fault.

In addition, combining the target root alarms in all the sub-faults to obtain a final root alarm in S300 may include, but not limited to, two implementation cases in FIG. 10 and FIG. 11 as follows.

FIG. 10 is a detailed flowchart of combining target root alarms to obtain a final root alarm according to an embodiment of the present disclosure. Combining the target root alarms in all the sub-faults to obtain a final root alarm in S300 may include, but not limited to, a following step S1000.

At S1000, the target root alarm is determined as the final root alarm when the target root alarms in all the sub-faults are consistent.

FIG. 11 is a detailed flowchart of combining target root alarms to obtain a final root alarm according to an embodiment of the present disclosure. Combining the target root alarms in all the sub-faults to obtain a final root alarm in S300 may include, but not limited to, the following steps S1100 and S1120.

At S1110, all target root alarms and all non-root alarms in all the sub-faults are acquired when the target root alarms in all the sub-faults are not consistent.

At S1120, an intersection of all the target root alarms and all the non-root alarms is deleted from all the target root alarms to obtain the final root alarm.

Based on the fault root cause alarm locating method of the above embodiments, the fault root cause alarm locating method of the embodiments of the present disclosure include, but not limited to, the following technical effects.

Firstly, to solve the problem that alarms in the aggregated fault correspond to different services or topologies and there is no propagation relationship between the alarms corresponding to different services or topologies, in the embodiments of the present disclosure, a fault splitting and combining method is implemented, to be specific, an aggregated fault is split into sub-faults according to a service or topology relationship, a root alarm of each of the sub-faults is located, and then the root alarms of the sub-faults are combined, thereby improving the accuracy of root alarm locating.

Secondly, the locating of the root alarms of the sub-faults and the combining of the root alarms of the sub-faults are realized using the mode matching method. Matching is respectively performed for a root alarm cluster and a derivative alarm cluster, and it is unnecessary to match every two alarms, such that higher universality is achieved and the accuracy of root alarm locating is improved. The mode matching supports the use of various matching algorithms, such as a Rete algorithm, to ensure the efficiency of mode matching.

Thirdly, to solve the problem that not all matching alarms are aggregated or some non-matching alarms are erroneously aggregated during fault alarm aggregation, in the process of mode matching, secondary analysis and alarm adjustment are performed for the to-be-analyzed fault and the faults associated with the to-be-analyzed fault in time and service or topology, to react on fault aggregation to improve the accuracy of fault aggregation.

Based on the above implementation environment and the above fault root cause alarm locating method, various embodiments of the fault alarm mode construction method of the present disclosure are proposed below.

FIG. 12 is a flowchart of a fault alarm mode construction method according to an embodiment of the present disclosure. The fault alarm mode construction method is used for constructing the preset fault alarm mode in the fault root cause alarm locating method of any one of the above embodiments, and may include, but not limited to, the following steps S1200, S1300, and S1400.

At S1200, an alarm association rule is acquired, where the alarm association rule includes a plurality of parent alarms and sub-alarms directly associated with each of the parent alarms.

At S 1300, a target parent alarm is determined from the plurality of parent alarms, and target sub-alarms directly and indirectly associated with the target parent alarm are selected.

At S1400, the preset fault alarm mode is constructed according to the target parent alarm and the target sub-alarms, where the preset root alarm in the preset fault alarm mode is the target parent alarm, and the preset derivative alarms in the preset fault alarm mode are the target sub-alarms.

In this embodiment of the present disclosure, through mode mining based on alarm association rules, a basic fault alarm mode can be constructed mainly by utilizing existing alarm association rules.

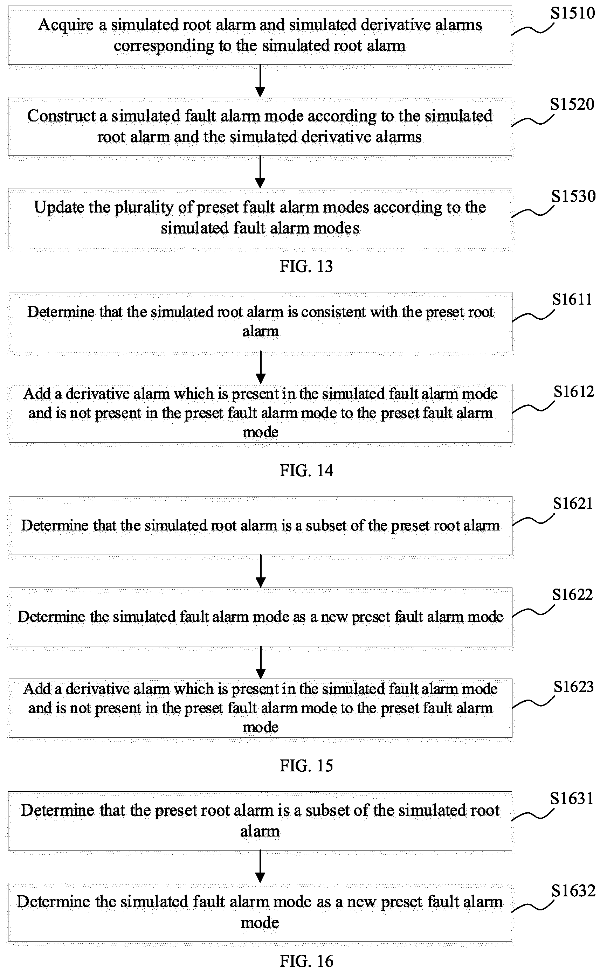

FIG. 13 is a flowchart of constructing a fault alarm mode by fault simulation according to an embodiment of the present disclosure. After constructing the preset fault alarm mode according to the target parent alarm and the target sub-alarms in S1400, the fault alarm mode construction method may further include, but not limited to, the following steps S1510, S1520, and S1530.

At S 1510, a simulated root alarm and simulated derivative alarms corresponding to the simulated root alarm are acquired.

At S1520, a simulated fault alarm mode is constructed according to the simulated root alarm and the simulated derivative alarms.

At S1530, the plurality of preset fault alarm modes are updated according to the simulated fault alarm mode.

In this embodiment of the present disclosure, faults can be artificially created or simulated through mode mining based on simulation data by utilizing a test environment or a simulation environment, and the generated fault alarm modes are used as a supplement to improve the basic fault alarm mode.

In addition, updating the plurality of preset fault alarm modes according to the simulated fault alarm mode in S1530 may include, but not limited to, four implementation cases in FIG. 14 to FIG. 17 as follows.

FIG. 14 is a detailed flowchart of updating a plurality of preset fault alarm modes according to simulated fault alarm mode according to an embodiment of the present disclosure. Updating the plurality of preset fault alarm modes according to the simulated fault alarm mode in S1530 may include, but not limited to, the following steps S1611 and S1612.

At S 1611, it is determined that the simulated root alarm is consistent with the preset root alarm.

At S1612, a derivative alarm which is present in the simulated fault alarm mode and is not present in the preset fault alarm mode is added to the preset fault alarm mode.

FIG. 15 is a detailed flowchart of updating a plurality of preset fault alarm modes according to simulated fault alarm mode according to another embodiment of the present disclosure. Updating the plurality of preset fault alarm modes according to the simulated fault alarm mode in S1530 may include, but not limited to, the following steps S1621, S1622, and S1623.

At S1621, it is determined that the simulated root alarm is a subset of the preset root alarm.

At S 1622, the simulated fault alarm mode is determined as a new preset fault alarm mode.

At S1623, a derivative alarm which is present in the simulated fault alarm mode and is not present in the preset fault alarm mode is added to the preset fault alarm mode.

FIG. 16 is a detailed flowchart of updating a plurality of preset fault alarm modes according to simulated fault alarm mode according to another embodiment of the present disclosure. Updating the plurality of preset fault alarm modes according to the simulated fault alarm mode in S1530 may include, but not limited to, the following steps S1631 and S1632.

At S1631, it is determined that the preset root alarm is a subset of the simulated root alarm.

At S 1632, the simulated fault alarm mode is determined as a new preset fault alarm mode.

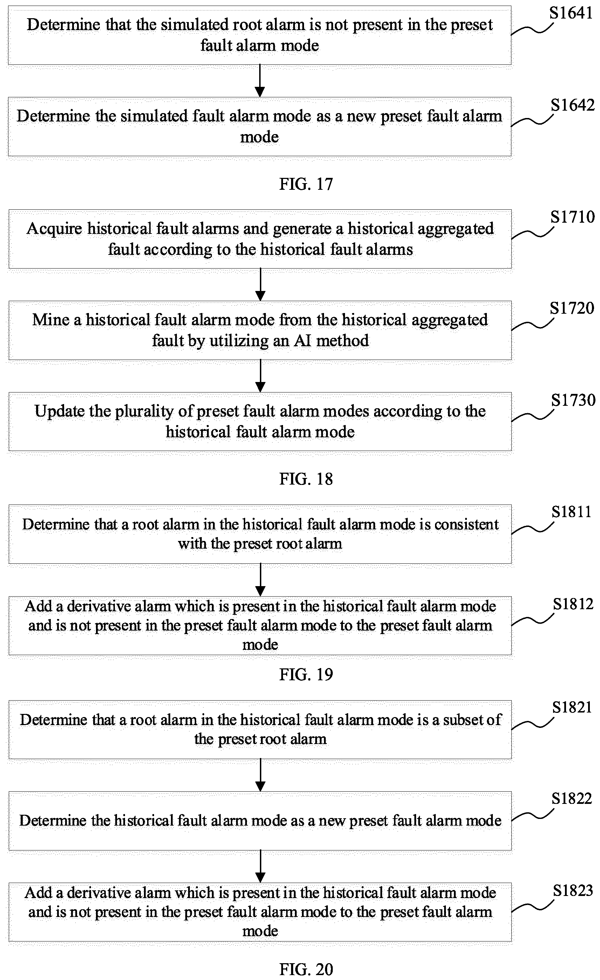

FIG. 17 is a detailed flowchart of updating a plurality of preset fault alarm modes according to simulated fault alarm mode according to another embodiment of the present disclosure. Updating the plurality of preset fault alarm modes according to the simulated fault alarm mode in S1530 may include, but not limited to, the following steps S1641 and S1642.

At S1641, it is determined that the simulated root alarm is not present in the preset fault alarm mode.

At S1642, the simulated fault alarm mode is determined as a new preset fault alarm mode.

FIG. 18 is a flowchart of constructing a fault alarm mode by AI according to an embodiment of the present disclosure. After constructing the preset fault alarm mode according to the target parent alarm and the target sub-alarms in S1400, the fault alarm mode construction method may further include, but not limited to, the following steps S1710, S1720, and S1730.

At S1710, historical fault alarms are acquired and a historical aggregated fault is generated according to the historical fault alarms.

At S1720, a historical fault alarm mode is mined from the historical aggregated fault by utilizing an AI method.

At S1730, the plurality of preset fault alarm modes are updated according to the historical fault alarm mode.

In this embodiment of the present disclosure, AI mode mining based on fault alarm aggregation can be performed, where historical alarms of a monitoring network are used, the historical alarms are aggregated into faults based on the fault dimension, and then mode mining is performed using an AI algorithm.

In addition, updating the plurality of preset fault alarm modes according to the historical fault alarm mode in S1730 may include, but not limited to, four implementation cases in FIG. 19 to FIG. 22 as follows.

FIG. 19 is a detailed flowchart of updating a plurality of preset fault alarm modes according to a historical fault alarm mode according to an embodiment of the present disclosure. Updating the plurality of preset fault alarm modes according to the historical fault alarm mode in S1730 may include, but not limited to, the following steps S1811 and S1812.

At S1811, it is determined that a root alarm in the historical fault alarm mode is consistent with the preset root alarm.

At S1812, a derivative alarm which is present in the historical fault alarm mode and is not present in the preset fault alarm mode is added to the preset fault alarm mode.

FIG. 20 is a detailed flowchart of updating a plurality of preset fault alarm modes according to a historical fault alarm mode according to another embodiment of the present disclosure. Updating the plurality of preset fault alarm modes according to the historical fault alarm mode in S1730 may include, but not limited to, the following steps S1821, S1822, and S1823.

At S1821, it is determined that a root alarm in the historical fault alarm mode is a subset of the preset root alarm.

At S1822, the historical fault alarm mode is determined as a new preset fault alarm mode.

At S1823, a derivative alarm which is present in the historical fault alarm mode and is not present in the preset fault alarm mode is added to the preset fault alarm mode.

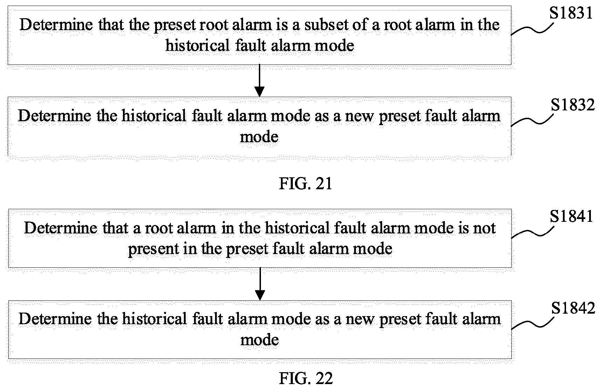

FIG. 21 is a detailed flowchart of updating a plurality of preset fault alarm modes according to a historical fault alarm mode according to another embodiment of the present disclosure. Updating the plurality of preset fault alarm modes according to the historical fault alarm mode in S1730 may include, but not limited to, the following steps S1831 and S1832.

At S1831, it is determined that the preset root alarm is a subset of a root alarm in the historical fault alarm mode.

At S1832, the historical fault alarm mode is determined as a new preset fault alarm mode.

FIG. 22 is a detailed flowchart of updating a plurality of preset fault alarm modes according to a historical fault alarm mode according to another embodiment of the present disclosure. Updating the plurality of preset fault alarm modes according to the historical fault alarm mode in S1730 may include, but not limited to, the following steps S1841 and S1842.

At S1841, it is determined that a root alarm in the historical fault alarm mode is not present in the preset fault alarm mode.

At S1842, the historical fault alarm mode is determined as a new preset fault alarm mode.

Based on the fault alarm mode construction method of the above embodiments, the fault alarm mode construction method of the embodiments of the present disclosure includes, but not limited to, the following technical effects.

The fault alarm mode is defined as a relationship between a root alarm and derivative alarms, and the derivative alarms are a group of alarms, all of which are generated after the root alarm is generated. A relationship between the derivative alarms does not need to be considered. Therefore, during mining of fault alarm modes, alarms of one type of fault are aggregated, a root alarm is labeled, and it is unnecessary to mine the relationship between every two alarms, thereby greatly reducing the difficulty of alarm relationship mining.

Firstly, a preliminary fault alarm mode is constructed using an existing alarm association rule. An important alarm is selected as a root alarm. For example, a service order dispatch alarm of an operator may be selected as the root alarm. All alarms related to this alarm are found level by level by utilizing an alarm correlation rule, and used as derivative alarms. This not only makes full use of existing alarm association rules based on expert experience and AI mining, but also obtains the required fault alarm modes.

Secondly, a fault may be created or simulated in the test environment, related alarms caused by the fault are used as a fault alarm mode. A root alarm is labeled according to the type of the fault, with other alarms being used as derivative alarms. The fault alarm mode is compared with existing fault alarm modes according to the root alarm. A new fault alarm mode is added or an existing fault alarm mode is modified according to the result of comparison.

Thirdly, historical alarms that have been formed may be aggregated into faults according to the time dimension and the service type or topology dimension. Considering that major faults do not frequently occur in the network, unlike the mining of alarm correlation, the matching-based mode mining is relatively simple and only focuses on related faults with important alarms, and fault alarms modes are acquired using AI methods such as frequent itemset mining. The mining of fault alarm modes only requires mining of alarm clusters and labeling of root alarms, and it is unnecessary to mine the relationship between every two alarms, thereby greatly reducing the mining difficulty.

Based on the above implementation environment, the above fault root cause alarm locating method, and the above fault alarm mode construction method, various embodiments of an overall structure of an intelligent fault processing system of the present disclosure are proposed below.

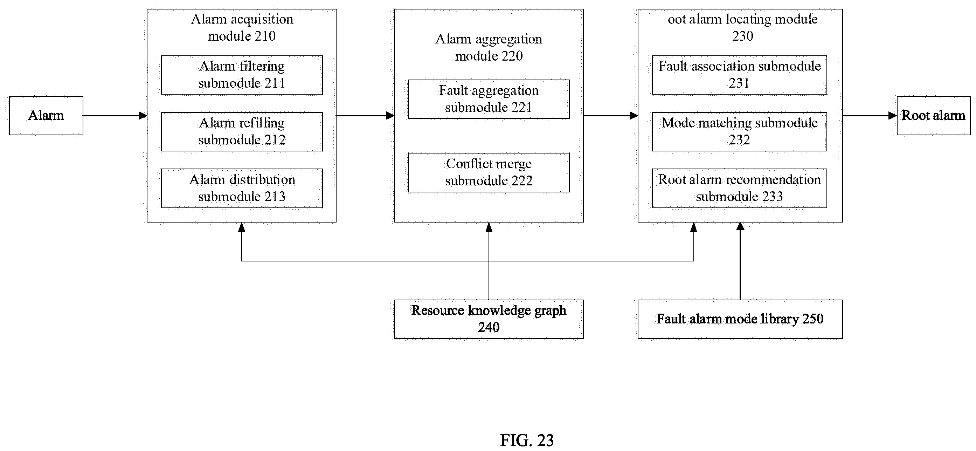

FIG. 23 is an overall structural diagram of an intelligent fault processing system according to an embodiment of the present disclosure. The system includes, but not limited to, an alarm acquisition module 210, an alarm aggregation module 220, a root alarm locating module 230, a resource knowledge graph 240, and a fault alarm mode library 250. Functions of the modules are respectively described as follows.

The alarm acquisition module 210 is mainly configured for alarm acquisition, filtering, refilling, and distribution in a monitoring network. The alarm acquisition module 210 includes, but not limited to, an alarm filtering submodule 211, an alarm refilling submodule 212, and an alarm distribution submodule 213. The alarm filtering submodule 211 is mainly configured for filtering out redundant or invalid alarms, including invalid alarms, intermittent alarms, toggling alarms, negligible alarms configured by the system, etc. The alarm refilling submodule 212 is mainly configured for adding some fields, e.g., a service affected by the alarm, a control domain to which the alarm belongs, etc., into alarms, to facilitate alarm aggregation and root alarm locating. The alarm distribution submodule 213 is mainly configured for distributing alarms according to different dimensions, e.g., according to control domains of the network or according to services, to achieve parallel alarm processing and ensure the processing efficiency of the system.

The alarm aggregation module 220 is mainly configured for aggregating alarms in the same time period that affect the same service or have a topological relationship, and analyzing the aggregated alarm according to the fault dimension. The aggregated fault may include one or more sub-faults at the same time. The alarm aggregation module 220 includes, but not limited to, a fault aggregation submodule 221 and a collision merge submodule 222. The fault aggregation submodule 221 is mainly configured for aggregating alarms by utilizing an appropriate aggregation method according to different network types, to aggregate alarms of the same dimension together. For example, for a static service path scenario in a Slicing Packet Network (SPN), alarms may be aggregated according to a spatiotemporal method involving the service dimension and the time dimension. The conflict merge submodule 222 is mainly configured for performing conflict merge on results of different aggregation modes to form a major fault event. For example, a plurality of faults that occur in the same time period and affect the same service are merged. The faults may occur in different network elements, boards, or interfaces.

The root alarm locating module 230 is mainly configured for centrally analyzing the alarms aggregated according to the fault dimension to find a root alarm of the fault. One fault may include one or more root alarms. The root alarm locating module 230 includes, but not limited to, a fault association submodule 231, a mode matching submodule 232, and a root alarm recommendation submodule 233. The fault association submodule 231 is mainly configured for finding faults associated with the to-be-analyzed fault according to the time dimension and the service or topology dimension. The main purpose is to perform secondary analysis for alarms that are preliminarily aggregated by the fault aggregation module in the mode matching process to improve the accuracy of root alarm locating, and adjust the alarms of the aggregated fault to react to fault aggregation. For example, when fault aggregation is performed according to the time dimension, an alarm of a fault may be aggregated to another fault or an alarm of another fault may be aggregated to this fault, due to a large difference in occurrence time of alarms for different types of faults. The mode matching submodule 232 is mainly configured for using a fault splitting and combining scheme to first split the fault into sub-faults according to the service or topology dimension and then perform fault matching using a mode matching algorithm based on an existing fault alarm mode library, where the fault matching includes root alarm matching and derivative alarm matching, and the derivative alarm matching further includes main matching and auxiliary matching; and adjusting the alarms of an associated fault during mode matching, to improve the accuracy of fault aggregation and root alarm locating. The root alarm recommendation submodule 233 is mainly configured for combining the root alarms of the sub-faults using a method consistent with the above mode matching method, to finally obtain the root alarm of the fault.

The resource knowledge graph 240 is mainly configured for storing data of the network and services in a graph database in a hierarchical and unified manner, to solve the problems such as scattered storage, repeated storage, missing, and low query efficiency of topology and service data in conventional network management systems, and meet the requirements for quick service query.

The fault alarm mode library 250 is configured for storing fault alarm modes of various types of faults, including root alarms and derivative alarms. The derivative alarms are an alarm cluster, and it is unnecessary to mine the propagation relationship between the derivative alarms.

Based on the overall structure of the intelligent fault processing system described above, various embodiments of the fault alarm mode construction method and the fault root cause alarm locating method of the present disclosure are proposed below.

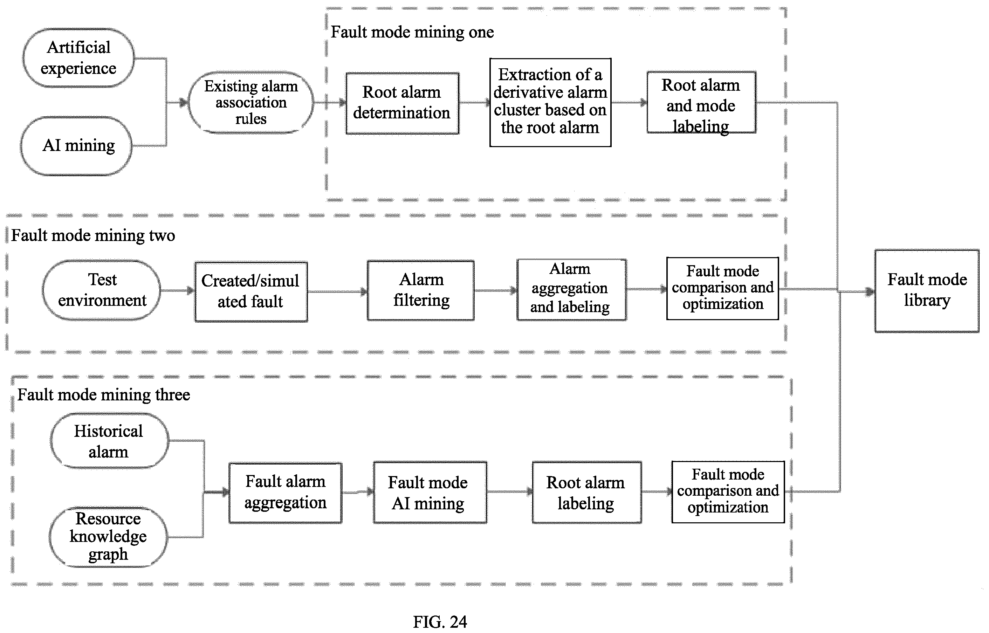

As shown in FIG. 24, the fault alarm mode construction method of the embodiments of the present disclosure includes three fault alarm mode mining modes.

The mining of fault alarm modes fully considers the application of existing alarm correlation and the mining of new fault alarm modes. Three methods may be used for mining: mining based on an alarm association relationship, mining based on simulated faults, and AI-based mining. In addition, in a root alarm locating scenario where the fault alarm mode matching fails, alarm weights are calculated for the fault alarm modes obtained by mining.

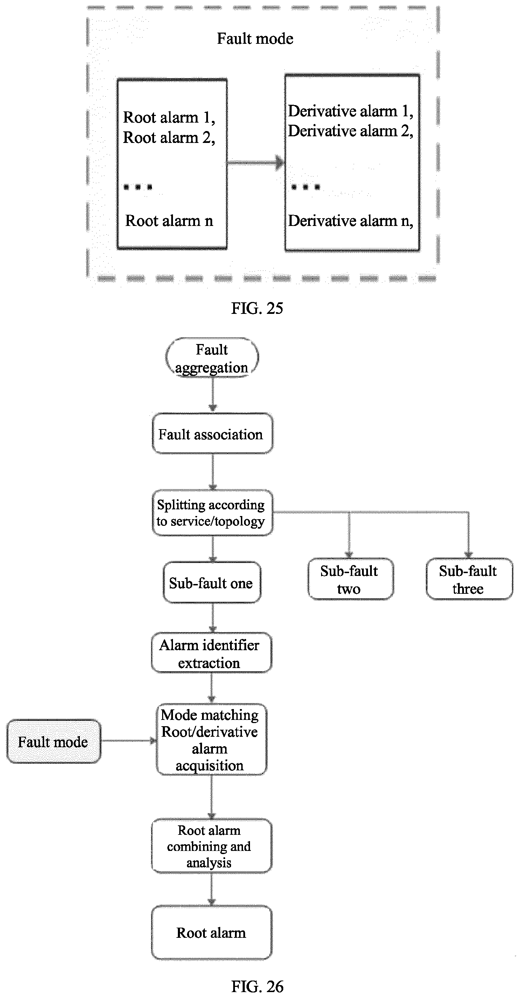

As shown in FIG. 25, the fault alarm mode is a set of alarms caused by a single fault, including one or more root alarms and a derivative alarm cluster. It is not necessary to learn an association relationship between alarms, so the difficulty of fault alarm mode mining is greatly reduced.

The first fault model mining method makes full use of existing alarm association rules to generate a basic fault alarm mode. Through the accumulation of artificial experience and the use of AI mining, a large number of alarm association rules have been accumulated in various fields. One of the fault alarm mode mining methods is to acquire fault alarm modes from the existing alarm association rules. According to different networks, a typical fault scenario and alarm are selected, associated alarms are queried level by level according to an association rule by utilizing the selected alarm as a root alarm to obtain derivative alarms of the root alarm, thus obtaining a fault alarm mode. Specific operations are as follows.
1. An existing alarm association rule is selected, where the alarm association rule is an association or causality relationship between every two alarms. Up to now, a large number of alarm association rules have been accumulated based on artificial experience or AI algorithms in various fields such as SPN bearer networks.
2. A typical fault scenario and root alarm are selected. First, for a to-be-analyzed network, such as a PTN network, a typical alarm is selected as a root alarm of a fault alarm mode. For example, a service order dispatch alarm of an operator may be selected as the root alarm.
3. Derivative alarms are extracted starting from the root alarm. Starting from the selected root alarm, alarms associated with this alarm are obtained as derivative alarms. Then, alarms associated with each of the obtained derivative alarms are queried, until all the related alarms are acquired.
4. The root alarm is labeled. For the alarm cluster generated above, the typical alarm selected at the beginning is labeled as a root alarm, with other alarms being used as derivative alarms of this root alarm, thus generating a fault alarm mode.

For the second fault model mining method, a fault alarm mode is generated directly from a typical fault, and fault alarm data obtained through testing or simulation is fully used as a supplement to the basic fault alarm mode. Specific operations are as follows.
1. A fault is artificially simulated. Product test data may be used, or special fault simulation may be performed. A typical fault is artificially created or simulated using a test environment or a simulation environment, to obtain related alarms caused by this fault.
2. Alarms not related to this fault, such as toggling alarms, are filtered out according to experience.
3. A root alarm of this fault is manually labeled, with other alarms being used as derivative alarms, to obtain a preliminary fault alarm mode, such as mode a.
4. Fault alarm mode comparison and optimization are performed. During comparison, matching is performed according to the root alarm. If the root alarm is present in the fault alarm mode library, e.g., a fault alarm mode A, the fault alarm mode A is optimized using the newly generated mode a. This is because the existing alarm association rules are often not comprehensive enough to cover all scenarios and alarms, and as a result, the basic fault alarm modes generated based on the alarm association rules are not comprehensive enough. Therefore, the derivative alarms of the mode a may be merged into the mode A. If the root alarm of the mode a is not present in the mode library, the mode a is directly stored in the mode library as a new fault alarm mode.

For the third fault model mining method, historical alarms may be used for fault aggregation, and then mining is performed using an AI algorithm. Fault alarm modes obtained by this method are also used as a supplement to the basic fault alarm mode. Specific operations are as follows.
1. Fault aggregation is performed. The acquired historical alarms are aggregated into faults. A resource knowledge graph is constructed for resource or service objects where the historical alarms are located, to facilitate the query of resources and services and assist in the aggregation of fault alarms. The historical alarms are aggregated into faults according to time and resource relationships by utilizing the resource knowledge graph or other methods.
2. Fault alarm mode mining is performed. Alarm itemsets that satisfy a support count are mined for the aggregated faults by utilizing an AI method such as frequent itemset mining. Because the frequency of occurrence of root alarms is often low in an actual network, many root alarms will be filtered out if an ordinary mining algorithm is used. Therefore, it is necessary to select faults with typical alarms and then perform mode mining for the selected faults.
3. Root alarm labeling is performed. For a fault obtained through AI mining, the root alarm needs to be labeled by an expert, and the fault with labeled root alarm is saved, thus generating the fault alarm mode a.
4. Fault alarm mode comparison and optimization are performed. The same processing method as that in the second fault alarm mode mining method is used, so the details will not be repeated here.

In addition, FIG. 26 shows a fault root cause alarm locating method according to an embodiment of the present disclosure. A fault is first split into sub-faults according to a service or topology; each of the sub-faults is matched against a fault alarm mode to locate a root alarm; and finally the root alarms of the sub-faults are combined through fault alarm mode matching to obtain a final root alarm. The method includes, but not limited to, the following steps one to seven.

At step one, fault association is performed, i.e., the current fault is associated with faults having an association relationship with the current fault in time and service or topology. In the service or topology dimension, the associated faults are faults belonging to the same service or topology as the current fault. In the time dimension, the associated faults are faults that occur within a period of time before and after the current fault, e.g., within ten minutes. The purpose of fault association is to solve fault aggregation errors. During fault aggregation, some alarms of a fault may be aggregated to another fault, or alarms of another fault may be aggregated to the current fault. In this case, if no association processing is performed, the accuracy of root alarm locating will be affected.

At step two, the fault is split according to the service or topology dimension. The fault is split according to the fault aggregation mode, and is preferably split according to the service dimension. For example, if a fault affects multiple services, the fault may be split according to the services, and the alarms may be allocated to different services. During splitting, the alarms are classified one by one according to the services. After all the alarms have been allocated, the splitting is ended. Not all the affected services need to be allocated an alarm.

At step three, after the fault is split, a plurality of sub-faults are generated, and a root alarm of each sub-fault is located.

At step four, alarm identifiers are extracted. An identifier of each alarm is extracted for matching against identifiers of fault alarm modes. The identifier is unique in the network. For example, in a PTN network, the alarm identifier is expressed as a combination of a resource type corresponding to the alarm and an alarm node.

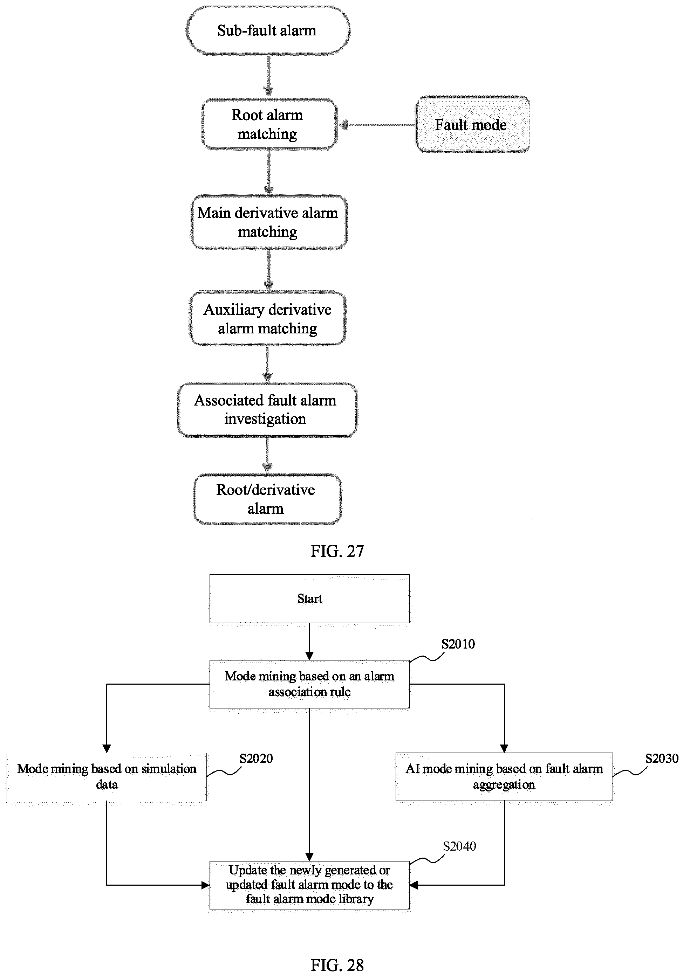

At step five, mode matching is performed. The purpose of mode matching is to determine root alarms and derivative alarms of the sub-faults. FIG. 27 shows a specific matching method including, but not limited to the following operations.
1. Root alarm matching is performed, i.e., a root alarm of the fault alarm mode is compared with the sub-fault alarms to determine whether the root alarm is included in the sub-fault alarms. To improve the matching efficiency, priorities may be set for the fault alarm modes by using a Rete algorithm such as drools.
2. Main derivative alarm matching is performed, i.e., derivative alarm matching is performed for the fault alarm mode for which the root alarm matching is successful. An intersection of derivative alarms of the fault alarm mode and the sub-fault alarms is matched against the sub-fault alarms. This is because the derivative alarms of the fault alarm mode are relatively comprehensive, and the sub-fault alarms inevitably have the problem of alarm loss or the problem that not all matching alarms are aggregated during fault aggregation. Therefore, in the derivative alarm matching, the sub-fault alarms are respectively matched against derivative alarms of fault alarm modes. This matching operation is referred to as sub-fault alarm matching.
   For example, assuming that a set of sub-fault alarms other than root alarms is defined as A and a set of derivative alarms of the fault alarm mode is defined as B, a matching degree of the main matching is *Mₘₐᵢₙ*= (A∩B)/A, i.e., the first matching degree described above, and a matching degree of the auxiliary matching is *Mₐᵤₓ=* (A∩B)B, i.e., the second matching degree described above.
3. Auxiliary derivative alarm matching is performed for the mode for which the main derivative alarm matching is successful. If the matching degree of the auxiliary matching is greater than a threshold, the judgment is ended, and the root alarm and the derivative alarms are output. Otherwise, query and adjustment of associated faults are performed.
4. Associated fault alarm adjustment is performed. According to the derivative alarms in the fault alarm mode, the alarms of the same type are queried in the associated faults, and then a comprehensive judgment is made based on the time and space dimensions. If the related alarms meet a requirement, it indicates that alarms in the associated faults (e.g., an alarm set C) probably belong to the current fault. In this case, the alarm set C is temporarily included in this fault, and at the same time, the alarm set C is deleted from the associated faults.
5. The root alarms and the derivative alarms of the sub-faults are output.

At step six, fault root alarm combining and analysis are performed. The root alarms of the plurality of sub-faults are combined. During the combining of the root alarms, an analysis is also made using the fault alarm mode. If each sub-fault alarm is present in the fault alarm mode library, secondary root alarm locating is performed using the method in step six. Otherwise, the root alarms are directly combined.

At step seven, the root alarm is output. According to the result of combining the sub-fault root alarms in step six, the root alarm is output as a recommended root alarm of the fault.

Based on the above implementation environment, the above fault root cause alarm locating method, and the above fault alarm mode construction method, various specific embodiments of the fault root cause alarm locating method and the fault alarm mode construction method of the present disclosure are proposed below.

FIG. 28 is a flowchart of fault alarm mode mining according to an embodiment of the present disclosure. Fault alarm modes mined using existing alarm association rules are used as basic modes, and modes mined based on simulation data and AI are used as supplementary modes. The fault alarm mode mining method includes, but not limited to, the following steps S2010 to S2040.

A fault alarm mode is formed by a root alarm and derivative alarms. The root alarm is a direct alarm of this fault and can be used to locate a root cause of the fault. For example, in a PTN bearer network, when a device port connection is faulty, a port loss of signal alarm that appears is a root cause alarm, and a large number of other alarms appear at the same time, such as a flexible Ethernet port unconnected alarm, a flexible Ethernet PHY loss of frame alarm, a tunnel switchover alarm, a fast rerouting alarm, etc. In this case, the alarms of this fault are aggregated together with the port loss of signal alarm as the root alarm and other alarms as derivative alarms, to generate a fault alarm mode.

At S2010, through mode mining based on alarm association rules, a basic fault alarm mode is constructed mainly by utilizing existing alarm association rules. Because of the rapid development of telecommunications networks, novel alarms continue to appear, and alarm association rules require the continuous accumulation of expert experience and continuous mining of AI. Therefore, ordinary alarm association rules cannot cover all fault scenarios, and need to be supplemented by other methods.

An alarm association rule is a propagation or causality relationship between every two alarms. The generation of the first alarm often leads to the emergence of the second alarm. The first alarm is defined as a parent alarm, and the second alarm is defined as a sub-alarm. A schematic table of the alarm association rule is shown in Table One.

**Table One**

| No. | Parent alarm | | | | Sub-alarm | |
|---|---|---|---|---|---|---|
| | Resource type | Alarm code | Alarm name | Resource type | Alarm code | Alarm name |
| 1 | 33 | 62 | Board dislocation | 203 | 8 | Ethernet physical interface (ETPI) Loss of signal (LOS) |
| 2 | 33 | 62 | Board dislocation | 203 | 37 | Ethernet physical interface (ETPI) Ethernet port not connected |
| 3 | 203 | 8 | Ethernet physical interface (ETPI) Loss of signal (LOS) | 467 | 6 | MTNPHY Loss of frame (LOF) |
| 4 | 203 | 8 | Ethernet physical interface (ETPI) Loss of signal (LOS) | 197 | 3 | Tunnel maintenance point Signal degrade (SD) |
| 5 | 203 | 8 | Ethernet physical interface (ETPI) Loss of signal (LOS) | 197 | 43 | Tunnel maintenance point Remote defect indication (RDI) |
| 6 | 203 | 8 | Ethernet physical interface (ETPI) Loss of signal (LOS) | 197 | 965 | Tunnel maintenance point Loss of connectivity |
| 7 | 203 | 8 | Ethernet physical interface (ETPI) Loss of signal (LOS) | 577 | 3511 | Tunnel state: down |
| 8 | 203 | 37 | Ethernet physical interface (ETPI) Ethernet port not connected | 467 | 6 | MTNPHY Loss of frame (LOF) |
| 9 | 203 | 37 | Ethernet physical interface (ETPI) Ethernet port not connected | 197 | 3 | Tunnel maintenance point Signal degrade (SD) |
| 10 | 203 | 37 | Ethernet physical interface (ETPI) Ethernet port not connected | 197 | 43 | Tunnel maintenance point Remote defect indication (RDI) |
| 11 | 203 | 37 | Ethernet physical interface (ETPI) Ethernet port not connected | 577 | 3511 | Tunnel state: down |
| 12 | 203 | 37 | Ethernet physical interface (ETPI) Ethernet port unconnected | 197 | 965 | Tunnel maintenance point Loss of connectivity |
| 13 | 467 | 6 | MTNPHY Loss of frame (LOF) | 197 | 965 | Tunnel maintenance point Loss of connectivity |
| 14 | 467 | 6 | MTNPHY Loss of frame (LOF) | 197 | 43 | Tunnel maintenance point Remote defect indication (RDI) |
| 15 | 577 | 3511 | Tunnel state: down | 632 | 20837 | L3VPN PEER unreachable |

At a first step, an alarm of a typical fault in a monitoring network is selected. A combination of a resource type and an alarm code, e.g., expressed as ResourceType_AlarmCode, can uniquely identify a type of alarm, e.g., a service order dispatch alarm of a telecommunications network. Using data in Table One as an example, typical alarms include board dislocation 33_62, ETPI LOS 4203_8, ETPI Ethernet port unconnected 4203_37, and L3VPN PEER unreachable 577_3511. 577_3511 is a service alarm which is generally the result of a fault, and is not regarded as a typical fault alarm herein.

At a second step, by using a typical alarm as a root alarm, sub-alarms associated with the root alarm are searched for level by level, to obtain derivatives alarm of the root alarm. For example, 33_62 is the root alarm and the other alarms in the table are all derivative alarms. In this case, a fault alarm mode of board dislocation can be obtained by aggregating the alarms together and labeling the root alarm. Similarly, a fault alarm mode of ETPI LOS is generated with 203_8 as a root alarm. In particular, when an Ethernet physical port is faulty, 203_8 and 203_37 are often direct alarms of the fault. The two alarms may both be used as root alarms of a fault. Fault alarm modes of various faults may be generated using the method. A fault priority is 0 by default. Table Two shows a schematic table of faults.

**Table Two**

| No. | Fault alarm mode | Root alarm | Derivative alarm | Priority |
|---|---|---|---|---|
| 1 | Board dislocation fault | 33_62 | 203_8, 208_37, 467_6, 467_16, 197_3, 197_43, 197_965, 577_3511, 577_3511, 632_20837 | 0 |
| 2 | Ethernet physical port fault | 203_8, 203_37 | 467_6, 467_16, 197_3, 197_43, 197_965, 577_3511, 577 _3511,632 20837 | 0 |
| 3 | ETPI LOS | 203_8 | 467 6, 467_16, 197 3, 197 43, 197 965, 577_3511, 577_3511, 632_20837 | 0 |
| 4 | ETPI Ethernet port unconnected | 203_37 | 467_6, 467_16, 197_3, 197_43, 197_965, 577_3511, 577_3511, 632_20837 | 0 |

At a third step, priorities are set for the fault alarm modes. The main purpose is to sort the faults and set different weights to solve the conflict in fault alarm mode matching. The sorting of the fault alarm modes is mainly based on root alarms. For example, the derivative alarms of Mode 1 in Table Two include root alarms of other modes, and Mode 1 has the highest priority. This is the main method for sorting the fault alarm modes. In addition, Mode 3 and Mode 4 do not have a propagation mode, and are of the same priority. Mode 2 is a combination of Mode 3 and Mode 4 and has a higher priority than those of Mode 3 and Mode 4. According to this method, the priorities of the fault alarm modes in Table Two are arranged in sequence as follows: Mode 1 > Mode 2 > Mode 3/4. The priorities of the four fault alarm modes are respectively changed to 1, 2, 3, and 3.

At S2020, faults are artificially created or simulated through mode mining based on simulation data by utlizing a test environment or a simulation environment, and the generated fault alarm modes are used as a supplement to improve the basic fault alarm mode.

The test environment or the simulation environment may be a laboratory test environment or a specially built fault simulation environment to ensure a clean and perfect network configuration. The artificially created or simulated faults are various faults caused by various artificial operations, such as connecting and disconnecting an optical fiber, disabling a port optical fiber activator, changing a communication Internet Protocol (IP) address, etc. Only one type of fault is created each time, and then the generated alarm data is analyzed.

The alarm data of the fault is aggregated, the root alarm is manually labeled, and other alarms are used as derivative alarms, thus generating a fault alarm mode. The alarms generated by the man-made fault is filtered to filter out the alarms not related to the corresponding fault.

Data of the new fault alarm mode obtained above is added to the fault alarm mode library by the following steps.

At a first step, the fault alarm modes in the mode library are gradually queried in a descending order of the priorities of the fault alarm modes in the mode library, to query whether a root alarm of the new mode is already present in the current fault alarm mode, and all modes containing all the root alarms of the new mode are acquired.

At a second step, if the query result is not empty, different scenarios are processed respectively.

If the root alarms in the new mode exactly match the root alarms in the current fault alarm mode, i.e., the types and number of root alarms in the new mode is the same as the types and number of root alarms in the current fault alarm mode, the derivative alarms of the new mode are used to improve the derivative alarms of the corresponding mode in the mode library. To be specific, the derivative alarms that are present in the new mode but are not present in the corresponding mode in the mode library are added to the corresponding mode in the mode library.

If the root alarms of the new mode are a subset of root alarms of an existing mode, the new mode is added to the mode library as a new fault alarm mode, and at the same time, the derivative alarms of the new mode are added to the existing fault alarm mode including the root alarms of the new mode.

If root alarms of an existing mode is a subset of the root alarms of the new mode or there is an intersection between the root alarms of an existing mode and the root alarms of the new mode, the new mode is directly added to the mode library as a new fault alarm mode.

At a third step, if the query result is empty, it indicates that the new mode is not present in the current mode library, and the new mode is directly added to the fault alarm mode library.

At a fourth step, a priority is set for the newly added mode in the fault alarm mode library. The setting method is the same as the method in S2010. The priority setting is performed for the newly added mode only, and the priorities of modes already present in the mode library do not need to be updated. If it is determined through query that the priority of the new mode is between priorities of two modes in the mode library and the priorities of the two modes are *P*₁ and *P*₂, the priority of the newly added fault alarm mode is (*P*₁ + *P*₂)/2.

At S2030, AI mode mining based on fault alarm aggregation is performed, where historical alarms of a monitoring network are used, the historical alarms are aggregated into faults based on the fault dimension, and then mode mining is performed using an AI algorithm. The mining method is mainly as follows.

At a first step, historical alarms are aggregated into faults. A resource knowledge graph is preferentially constructed for resource or service objects where the historical alarms are located, to facilitate the query of resources and services and assist in the aggregation of fault alarms. The historical alarms are aggregated into faults according to time and resource relationships by utilizing the resource knowledge graph or other methods.

At a second step, faults with typical alarms are selected, to facilitate the mining of fault alarm modes.

At a third step, fault alarm mode mining is performed using an AI method. A frequent itemset mining method may be used. Alarm itemsets that satisfy a support count are mined for the aggregated faults.

At a fourth step, for the fault alarm mode obtained through mining, the root alarm is labeled by an expert, and the other alarms are used as derivative alarms, thus obtaining a newly identified fault alarm mode.

At a fifth step, the newly identified fault alarm mode is added to the current fault alarm mode library by using the method in S2020.

At S2040, the newly generated or updated fault alarm mode is updated to the fault alarm mode library, and at the same time, a new fault alarm mode query method is generated, or an existing fault alarm mode query method is updated.

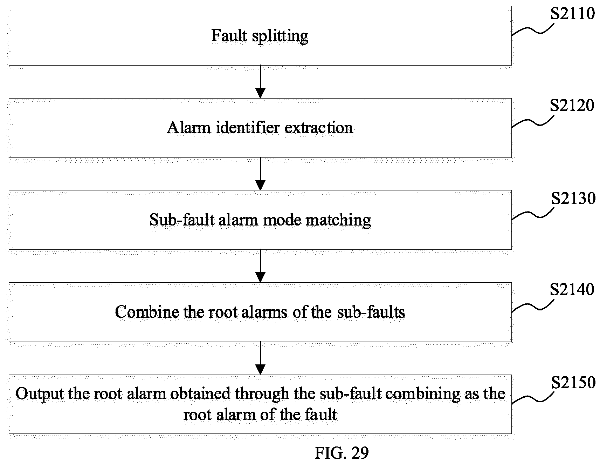

FIG. 29 is a flowchart of root alarm locating based on fault alarm mode matching according to an embodiment of the present disclosure. The root alarm locating method is for an aggregated fault. The aggregated fault is obtained by aggregating acquired alarm data according to the fault dimension. The root alarm locating method includes alarm filtering, fault aggregation, and conflict merge. The alarm filtering is to screen acquired alarms of the monitoring network to filter out alarms not related to the fault, as well as intermittent alarms, toggling alarms, etc. Fault aggregation is a fault aggregation operation for different alarm types. The purpose of fault aggregation is to aggregate alarms caused by a fault into the fault. For example, alarms may be aggregated according to the time dimension and the service or topology dimension. For different services or topologies, a sliding time window is used for fault aggregation. Conflict merge is to merge different faults affecting the same service or the same topology device into one fault. For example, if two faults affect the same service, the two faults are merged into one fault. The method of root alarm locating based on fault alarm mode matching includes, but not limited to, the following steps S2110 to S2150.

At S2110, fault splitting is performed, i.e., the aggregated fault is split into a plurality of sub-faults according to the service or topology dimension. The main reason of fault splitting is that during the conflict merge of faults, different sub-faults that affect the same service or have the same topology device are merged together, and these sub-faults do not have a propagation relationship. If the fault is analyzed as a whole, the identified root alarms and derivative alarms are often erroneous, seriously affecting the accuracy of root alarm locating.

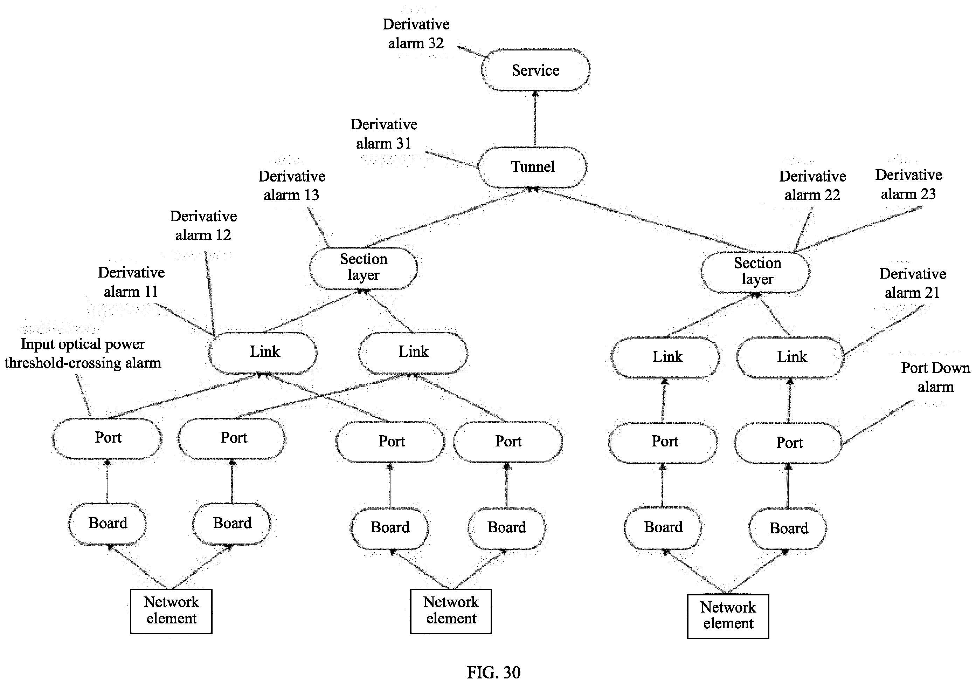

To illustrate the fault splitting process, an embodiment of the present disclosure is described. For example, FIG. 30 shows a resource and service topology in a static service scenario of a PTN network. During fault aggregation, alarms shown in FIG. 30 are aggregated into one fault because they affect the same service. This fault actually has two different sub-faults: port A input optical power threshold-crossing and port B Down.

At a first step, the fault is split according to the service or network topology affected by the fault. Alarms of the same service may be split according to primary and secondary links. For example, the fault in FIG. 30 may be split into a sub-fault one and a sub-fault two. The sub-fault one includes an input optical power threshold-crossing alarm, a derivative alarm 11, a derivative alarm 12, a derivative alarm 13, a derivative alarm 31, and a derivative alarm 32. The sub-fault two includes a port Down alarm, a derivative alarm 21, a derivative alarm 22, a derivative alarm 23, a derivative alarm 31, and a derivative alarm 32.

At a second step, sub-fault selection is performed. The sub-faults are sorted in a descending order of the numbers of alarms included in the sub-faults, and if a few sub-faults ranking in front already include all alarms, the other sub-faults are deleted. For example, a fault is split into n sub-faults according to the first step, and sorted according to alarms. If the first m sub-faults already include all fault alarms, only the m sub-faults are selected.

At S2120, alarm identifiers are extracted. A unique identifier of each alarm is extracted. The identifier is consistent with an identifier of a fault alarm mode library, and is used for matching with the fault alarm mode. For example, in a PTN network, the alarm identifier is expressed as a combination of a resource type and an alarm code, e.g., ResType+AlarmCode.

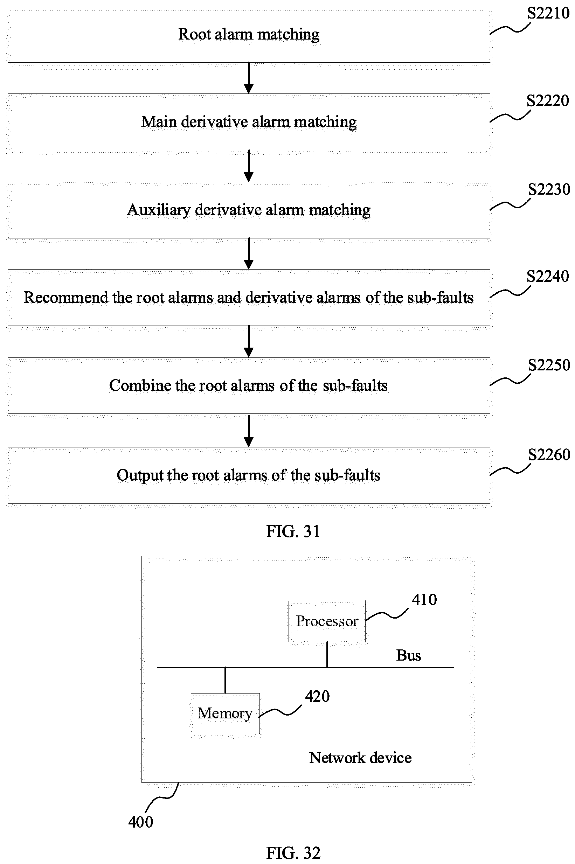

At S2130, sub-fault alarm mode matching is performed. To be specific, the fault alarms are matched against the alarms in the mode library. Root alarm matching is performed first. After the root alarm matching is successful, derivative alarm matching is performed. After the matching is successful, the root alarm and the derivative alarms are output. The derivative alarm matching includes main matching and auxiliary matching. The auxiliary matching can adjust fault aggregation and react on fault aggregation, to improve the accuracy of fault aggregation. For the two sub-faults shown in FIG. 30, an optical power threshold-crossing alarm and a port Down alarm are respectively output as root alarms of the two sub-faults. To illustrate the matching process in detail, a detailed description is given below with reference to FIG. 31.

At S2140, the root alarms of the sub-faults are combined, i.e., the root alarms identified for the sub-faults are analyzed and combined. The combining of the root alarms of the sub-faults is not a simple combining operation, but instead, an operation of performing secondary identification of the root alarms by using the method in S2130 to obtain a final root alarm. The root alarms of the two sub-faults in FIG. 30 are combined directly, so this fault has two root alarms.

At S2150, the root alarm obtained through the sub-fault combining is output as the root alarm of the fault for the intelligent root cause analysis of the fault.

FIG. 31 is a flowchart of sub-fault alarm mode matching according to an embodiment of the present disclosure. First, it is determined according to the priorities of the fault alarm modes that all the root alarms of the fault alarm modes are present in the sub-faults. Then, the derivative alarms of the fault alarm modes are matched against non-root alarms of the sub-faults by main matching and auxiliary matching. Finally, the root alarms of the sub-faults are acquired. The sub-fault alarm mode matching method includes, but not limited to, the following steps S2210 to S2260.

At S2210, root alarm matching is performed. The root alarm matching is performed according to the priorities of the fault alarm modes in the fault alarm mode library.

At the time of generation of the fault alarm mode library, the fault alarm modes are sorted, to ensure the order of fault alarm mode matching, thereby eliminating the conflict problem in matching. For example, the priority of a mode one is higher than that of a mode two, and root alarms of both the mode one and the mode two are included in the sub-fault alarms. The root alarm matching is preferentially performed based on the mode one.

To ensure the matching efficiency, an existing mode matching algorithm may be used. The mode matching may be automatically performed using a Rete algorithm.

At S2220, main derivative alarm matching is performed. To be specific, after the root alarm matching is successful, the derivative alarms of the fault alarm mode are matched against the non-root alarms of the sub-faults. If the matching accuracy does not reach a set matching degree threshold, the mode matching fails, and the matching for other modes continues to be performed. The matching degree threshold is set according to artificial experience. For example, the matching degree threshold may be set to 80%.

The main derivative alarm matching is for the non-root alarms of the sub-faults. This is because the problem that not all matching alarms are aggregated or some non-matching alarms are erroneously aggregated often occurs during fault alarm aggregation due to network configuration or aggregation algorithm reasons. Considering that the derivative alarms of the fault alarm modes are relatively accurate and perfect, the matching is performed based on the non-root alarms of the sub-faults first. For example, assuming that a set of sub-fault alarms other than root alarms is defined as A and a set of derivative alarms of the fault alarm mode is defined as B, a matching degree of the main matching is *Mₘₐᵢₙ*= (A∩B)/A. If the matching degree satisfies the preset threshold, the auxiliary matching is performed; otherwise, the root alarm matching continues to be performed.

At S2230, auxiliary derivative alarm matching is performed. To be specific, the auxiliary matching is performed after the root alarm matching and the main derivative alarm matching are successful. The purpose of the auxiliary matching is not to improve the matching accuracy, but to adjust the alarms of the aggregated fault to improve the accuracy of fault aggregation.

The auxiliary derivative alarm matching is for the derivative alarms of the fault alarm mode. A matching degree of the auxiliary matching is *Mₐᵤₓ*= (A∩B)B. If the matching degree of the auxiliary matching is greater than a threshold, a next procedure is performed. Otherwise, it indicates that the problem that not all matching alarms are aggregated or some non-matching alarms are erroneously aggregated during fault aggregation. The problem that not all matching alarms are aggregated may be solved through fault association. For the problem that some non-matching alarms are erroneously aggregated, no processing is performed for this fault, and the problem is solved through processing of associated faults. The threshold is set according to artificial experience, and for example, may be set to 80%.

The associated faults are faults having an association relationship with the current fault in time and service or topology. The alarm regarding the problem that not all matching alarms are aggregated or some non-matching alarms are erroneously aggregated is usually an alarm of an associated fault, or an alarm of the current fault which is aggregated into an associated fault. If a derivative alarm such as an alarm C in the fault alarm mode is not present in the sub-faults but is present in an associated fault, it is very likely that the alarm C is erroneously aggregated into the associated fault, and should be adjusted from the associated fault to the current fault. Similarly, if an alarm such as an alarm D is not present in the derivative alarms but is present in the sub-faults, it is very likely that the alarm D is erroneously added to the current fault, and should be adjusted from the current fault to an associated fault. The analysis and adjustment of the alarm D is not performed during the analysis of the sub-faults, but is performed during processing of the associated fault.

At S2240, the root alarms and the derivative alarms of the sub-faults are recommended. Through the above procedures, the root alarms of the sub-faults and the corresponding derivative alarms can be obtained, and input to a next procedure.

At S2250, the root alarms of the sub-faults are combined. When the fault is split into a plurality of sub-faults, the root alarms of the plurality of sub-faults need to be combined. If the root alarms of the plurality of sub-faults are consistent, the alarm is determined as the root alarm of the fault. Otherwise, the root alarms and the derivative alarms of the sub-faults are respectively combined to generate a root alarm list R and a derivative alarm list D, then an intersection of the root alarm list and the derivative alarm list is deleted from the root alarm list, and the remaining root alarm(s) are used as the root alarm(s) of the fault.

At S2260, the root alarms of the sub-faults are output. The analyzed root alarms and derivative alarms are output as the root alarms and derivative alarms of the sub-faults, and the process is ended.

FIG. 32 is a schematic structural diagram of a network device according to an embodiment of the present disclosure. An embodiment of the present disclosure discloses a network device 400, including: a memory 420, a processor 410, and a computer program stored in the memory 420 and executable by the processor 410. The computer program, when executed by the processor 410, causes the processor 410 to implement the fault root cause alarm locating method and/or the fault alarm mode construction method according to any one of the above embodiments.

The memory 420, as a non-transitory computer-readable storage medium, may be configured for storing a non-transitory software program and a non-transitory computer-executable program. In addition, the memory 420 may include a high-speed random access memory, and may also include a non-transitory memory, e.g., at least one magnetic disk storage device, flash memory device, or other non-transitory solid-state storage device. In some implementations, the memory 420 may include memories located remotely from the processor, and the remote memories may be connected to the processor 410 via a network. Examples of the network include, but not limited to, the Internet, an intranet, a local area network, a mobile communication network, and combinations thereof.

The network 400 in this embodiment may correspond to the telecommunication device 110 in implementation environment in the embodiment shown in FIG. 1. The two embodiments belong to the same inventive concept and therefore have the same implementation principle and technical effects, so the details will not be repeated here.

The non-transitory software program and instructions required to implement the fault root cause alarm locating method of the foregoing embodiments are stored in the memory 420 which, when executed by the processor 410, cause the processor 410 to implement the fault root cause alarm locating method of the foregoing embodiments,

Alternatively, the non-transitory software program and instructions required to implement the fault alarm mode construction method of the foregoing embodiments are stored in the memory 420 which, when executed by the processor 410, cause the processor 410 to implement the fault alarm mode construction method of the foregoing embodiments,

It should be noted that for specific implementations and technical effects of the network device 400 according to the embodiments of the present disclosure, reference may be made to the specific implementations and technical effects of the fault root cause alarm locating method and/or the fault alarm mode construction method.

In addition, an embodiment of the present disclosure discloses a computer-readable storage medium storing computer-executable instructions which, when executed by a processor, cause the processor to implement the fault root cause alarm locating method and/or the fault alarm mode construction method according to any one of the above embodiments.

In addition, an embodiment of the present disclosure discloses a computer program product, including a computer program or computer instructions stored in a computer-readable storage medium. The computer program or computer instructions, when read from the computer-readable storage medium by a processor of a computer device, cause the computer device to execute the fault root cause alarm locating method and/or the fault alarm mode construction method according to any one of the above embodiments.

Those having ordinary skills in the art can understand that all or some of the steps in the methods disclosed above and the functional modules/units in the system and the apparatus may be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A fault root cause alarm locating method, comprising:
acquiring an aggregated fault, and splitting the aggregated fault to obtain a plurality of sub-faults;
for each of the sub-faults, determining a target root alarm in the sub-fault according to the sub-fault and a plurality of preset fault alarm modes, wherein each of the preset fault alarm modes comprises a preset root alarm and preset derivative alarms corresponding to the preset root alarm; and
combining the target root alarms in all the sub-faults to obtain a final root alarm.

2. The fault root cause alarm locating method of claim 1, wherein splitting the aggregated fault to obtain a plurality of sub-faults comprising one of the following:
splitting the aggregated fault according to a service type to obtain the plurality of sub-faults; or
splitting the aggregated fault according to a network topology to obtain the plurality of sub-faults.

3. The fault root cause alarm locating method of claim 1, wherein after the plurality of sub-faults are obtained, the fault root cause alarm locating method further comprises:
determining a number of alarms in each of the sub-faults and sorting all of the sub-faults in a descending order of the numbers of alarms; and
selecting first m sub-faults as target sub-faults and determining a final root alarm from the target sub-faults, in response to the first m sub-faults comprising all fault alarms of the aggregated fault, wherein m is a positive integer.

4. The fault root cause alarm locating method of claim 1, wherein determining a target root alarm in the sub-fault according to the sub-fault and a plurality of preset fault alarm modes comprises:
acquiring a priority of each of the preset fault alarm modes, and selecting a target preset fault alarm mode from the plurality of preset fault alarm modes in a descending order of the priorities;
matching the target preset fault alarm mode against the sub-fault to obtain a root alarm and non-root alarms in the sub-fault;
determining a first matching degree according to the non-root alarms and the preset derivative alarms in the target preset fault alarm mode, wherein the first matching degree is a ratio between an intersection of the non-root alarms and the preset derivative alarms and the non-root alarms; and
determining the root alarm as the target root alarm in response to the first matching degree being greater than a first preset threshold.

5. The fault root cause alarm locating method of claim 4, wherein after determining the root alarm as the target root alarm, the fault root cause alarm locating method further comprises:
determining a second matching degree according to the non-root alarm and the preset derivative alarms in the target preset fault alarm mode, wherein the second matching degree is a ratio between an intersection of the non-root alarms and the preset derivative alarms and the preset derivative alarms;
acquiring an associated fault corresponding to the aggregated fault in response to the second matching degree being less than or equal to a second preset threshold; and
adjusting fault alarms in the sub-fault according to the associated fault, the target preset fault alarm mode, and the sub-fault.

6. The fault root cause alarm locating method of claim 5, wherein adjusting fault alarms in the sub-fault according to the associated fault, the target preset fault alarm mode comprises at least one of
adjusting a target fault alarm from the associated fault to the sub-fault, in response to the target fault alarm being comprised in the associated fault and the preset derivative alarms in the target preset fault alarm mode and being not comprised in the sub-fault; or
adjusting a target fault alarm from the sub-fault to the associated fault, in response to the target fault alarm being not comprised in the associated fault and the preset derivative alarms in the target preset fault alarm mode and being comprised in the sub-fault.

7. The fault root cause alarm locating method of claim 1, wherein combining the target root alarms in all the sub-faults to obtain a final root alarm comprises at least one of
determining the target root alarm as the final root alarm in response to the target root alarms in all the sub-faults are consistent; or
acquiring all target root alarms and all non-root alarms in all the sub-faults in response to the target root alarms in all the sub-faults being not consistent, and deleting an intersection of all the target root alarms and all the non-root alarms from all the target root alarms to obtain the final root alarm.

8. A fault alarm mode construction method, for constructing the preset fault alarm mode in the fault root cause alarm locating method of any one of claims 1 to 7, the fault alarm mode construction method comprising:
acquiring an alarm association rule, wherein the alarm association rule comprises a plurality of parent alarms and sub-alarms directly associated with each of the parent alarms;
determining a target parent alarm from the plurality of parent alarms, and selecting target sub-alarms directly and indirectly associated with the target parent alarm; and
constructing the preset fault alarm mode according to the target parent alarm and the target sub-alarms, wherein the preset root alarm in the preset fault alarm mode is the target parent alarm, and the preset derivative alarms in the preset fault alarm mode are the target sub-alarms.

9. The fault alarm mode construction method of claim 8, wherein after constructing the preset fault alarm mode according to the target parent alarm and the target sub-alarms, the fault alarm mode construction method further comprises:
acquiring a simulated root alarm and simulated derivative alarms corresponding to the simulated root alarm;
constructing a simulated fault alarm mode according to the simulated root alarm and the simulated derivative alarms; and
updating the plurality of preset fault alarm modes according to the simulated fault alarm mode.

10. The fault alarm mode construction method of claim 9, wherein updating the plurality of preset fault alarm modes according to the simulated fault alarm mode comprises at least one of
adding a derivative alarm which is present in the simulated fault alarm mode and is not present in the preset fault alarm mode to the preset fault alarm mode, in response to the simulated root alarm being consistent with the preset root alarm;
determining the simulated fault alarm mode as a new preset fault alarm mode and adding a derivative alarm which is present in the simulated fault alarm mode and is not present in the preset fault alarm mode to the preset fault alarm mode, in response to the simulated root alarm being a subset of the preset root alarm;
determining the simulated fault alarm mode as a new preset fault alarm mode in response to the preset root alarm being a subset of the simulated root alarm; or
determining the simulated fault alarm mode as a new preset fault alarm mode in response to the simulated root alarm being not present in the preset fault alarm mode.

11. The fault alarm mode construction method of claim 8, wherein after constructing the preset fault alarm mode according to the target parent alarm and the target sub-alarms, the fault alarm mode construction method further comprises:
acquiring historical fault alarms and generating a historical aggregated fault according to the historical fault alarms;
mining a historical fault alarm mode from the historical aggregated fault by utilizing an Artificial Intelligence (AI) method; and
updating the plurality of preset fault alarm modes according to the historical fault alarm mode.

12. The fault alarm mode construction method of claim 11, wherein updating the plurality of preset fault alarm modes according to the historical fault alarm mode comprises at least one of:
adding a derivative alarm which is present in the historical fault alarm mode and is not present in the preset fault alarm mode to the preset fault alarm mode, in response to a root alarm in the historical fault alarm mode being consistent with the preset root alarm;
determining the historical fault alarm mode as a new preset fault alarm mode and adding a derivative alarm which is present in the historical fault alarm mode and is not present in the preset fault alarm mode to the preset fault alarm mode, in response to a root alarm in the historical fault alarm mode being a subset of the preset root alarm;
determining the historical fault alarm mode as a new preset fault alarm mode in response to the preset root alarm being a subset of a root alarm in the historical fault alarm mode; or
determining the historical fault alarm mode as a new preset fault alarm mode in response to a root alarm in the historical fault alarm mode being not present in the preset fault alarm mode.

13. A network device, comprising: a memory, a processor, and a computer program stored in the memory and executable by the processor, wherein the computer program, when executed by the processor, causes the processor to perform the fault root cause alarm locating method of any one of claims 1 to 7 and/or the fault alarm mode construction method of any one of claims 8 to 12.

14. A computer-readable storage medium, storing computer-executable instructions which, when executed by a processor, cause the processor to perform the fault root cause alarm locating method of any one of claims 1 to 7 and/or the fault alarm mode construction method of any one of claims 8 to 12.

15. A computer program product, comprising a computer program or computer instructions stored in a computer-readable storage medium, wherein the computer program or the computer instructions, when read from the computer-readable storage medium by a processor of a computer device, causes the computer device to perform the fault root cause alarm locating method of any one of claims 1 to 7 and/or the fault alarm mode construction method of any one of claims 8 to 12.
